# FASCICULE DE BREVET EUROPEEN

(11) **EP 2 201 265 B1**
(45) Date de publication et mention de la délivrance du brevet: **21.12.2016**
(21) Numéro de dépôt: 08855768.1
(22) Date de dépôt: 19.09.2008
(51) Int. Cl.: F16G 3/04, F16G 3/08

(54) **DISPOSITIF PERFECTIONNE DE JONCTION POUR BANDES TRANSPORTEUSES**
VERBESSERTE VERBINDUNGSVORRICHTUNG FÜR FÖRDERBÄNDER
IMPROVED JUNCTION DEVICE FOR CONVEYOR BELTS

(30) Priorité: 19.09.2007 FR 0706619
(43) Date de publication de la demande: 30.06.2010
(73) Titulaire: Aser, 42401 Saint-Chamond (FR)
(72) Inventeur: JAKOB, Horst, F-30360 Deaux (FR)
(74) Mandataire: Novagraaf Technologies
(86) Numéro de dépôt international: PCT/FR2008/001315
(87) Numéro de publication internationale: WO 2009/071772

(56) Documents cités:
- EP-A- 0 752 542
- FR-A- 2 792 050
- GB-A- 114 129
- GB-A- 188 090
- US-A- 3 668 742
- US-A- 5 048 675

## Description

On connaît, pour différentes applications, à savoir dans les mines, les travaux publics, les industries alimentaires et dans bien d'autres domaines, les jonctions d'extrémités de bandes continues, dites aussi bandes transporteuses, tapis transporteurs, bandes sans fin, courroies, etc. Ces jonctions d'extrémité sont de deux types principaux : les jonctions directes, par collage ou par vulcanisation des extrémités de bandes transporteuses préparées dans ce but, et les jonctions faisant appel à des dispositifs rapportés à chacune des deux extrémités de la bande soit au moyen de crampons, de rivets, de vis, soit au moyen de griffes, ou crocs, faisant corps avec les dispositifs de jonction. Ces dispositifs de jonction comprennent des séries d'agrafes en forme de U comportant des charnons, ou oreilles, qui sont disposées à cheval sur chacune des extrémités de la bande, qui sont simplement coupées dans le sens transversal de la bande, perpendiculairement au sens longitudinal, ou sens de défilement, de celle-ci. Les charnons de l'une des séries d'agrafes fixées à une première extrémité de la bande s'imbriquent avec les charnons de l'autre série d'agrafes fixées à la deuxième extrémité de la bande, et une tige de liaison et d'articulation est introduite alternativement dans un charnon de la première série puis dans un charnon de la deuxième série et ainsi de suite jusqu'au dernier charnon. On comprend qu'un tel ensemble fonctionne ensuite à la manière d'une charnière.

Ces agrafes comportent chacune une plaque supérieure et une plaque inférieure dans le prolongement d'un, ou de plusieurs charnons, généralement de deux charnons, ces plaques servant à la fixation des charnons, comme indiqué plus haut, au moyen de crampons, de rivets ou d'autres moyens similaires. Elles sont livrées en bandes sécables formant des séries d'agrafes juxtaposées reliées par le métal des plaques juxtaposées, le métal comportant une rainure, ce qui permet de prélever, en les séparant, le nombre d'agrafes nécessaires au moment de la pose, dans une bande comportant un grand nombre d'agrafes.

L'autre genre d'agrafes de jonction de bande transporteuse est celui des agrafes à griffes. A l'origine on utilisait des agrafes individuelles, en fil métallique, courbées en forme de U comportant des pointes recourbées, analogues à ce que l'on appelle des agrafes "nez de porc" utilisées par exemple dans les fabrications de sommiers, de sièges à ressorts et de matelas à ressorts. Ces agrafes servaient par exemple pour réaliser des jonctions de courroies, ou de bandes transporteuses relativement minces. Pour éviter un conflit entre les pointes fixant ces agrafes avec un débordement par rapport à l'extrémité des bandes transporteuses, la pliure en U était décalée ce qui procurait des branches de longueurs différentes dont les griffes ne risquaient pas d'entrer en conflit lors du resserrement des agrafes sur l'extrémité des bandes transporteuses. Les agrafes de ce genre, désignées plus loin agrafes génération I, sont décrites par exemple dans plusieurs documents antérieurs qui portent sur des perfectionnements aux agrafes, génération I, considérées comme connues dès 1935 : il s'agit du brevet allemand 648 538 (Paul Wever) déposé le 09/08/1935, du brevet français 2 055 625 du 24/07/1970, avec priorité conventionnelle de la demande de modèle d'utilité allemand G 69 29 255.3 déposée le 24/07/1967 (Thomas Joseph Heimbach GmbH), du brevet US N° 5 048 675 du 06/02/1991, avec priorité du 06/12/1990 modèle d'utilité allemand 90 165 86 (Mühlen Sohn GmbH).

Ces brevets illustrent l'état de la technique de base concernant les agrafes de jonction à griffes, qui sera appelé plus loin "génération I". Comme le montre les dessins, il s'agit d'agrafes individuelles en forme de U ouvert, en fil, comportant chacune deux pointes courbées, qui sont posées en étant resserrées sur l'extrémité d'une bande transporteuse, le fond du U débordant de cette extrémité pour former, avec les autres agrafes de la série, une série de charnons imbricables avec d'autres charnons disposés sur l'autre extrémité de la bande transporteuse.

Ces documents montrent clairement que pour éviter un conflit entre la griffe inférieure et la griffe supérieure d'une même agrafe, on joue soit sur la forme des griffes (dernier brevet cité plus haut), soit sur la longueur des branches supérieure et inférieure d'une même agrafe. Le premier brevet cité plus haut utilise alternativement une agrafe courte, puis une agrafe longue et ainsi de suite. Ceci montre que depuis très longtemps, dès la génération I, celle des agrafes individuelles en fil, les industriels avaient pensé à éviter dans la mesure du possible de déchirer l'extrémité de la bande en répartissant les pointes des griffes individuelles dans le sens longitudinal pour éviter un effet de "pointillé".

Un perfectionnement a consisté à réunir ces agrafes individuelles par une barrette continue reliant les griffes supérieures qui ont été décalées par rapport aux griffes inférieures, disposées elles dans le prolongement des charnons, les griffes supérieures étant situées de part et d'autre de l'axe longitudinal des charnons, qui est aussi celui des griffes inférieures. Pour réaliser ces agrafes on a utilisé la découpe dans une bande de tôle, ou feuillard, métallique. Ces agrafes sont appelées plus loin agrafes de la génération II.

La publication de demande de brevet EP 0 752 542 A1 (Sülzle) a ajouté aux agrafes de la génération II des barrettes reliant deux griffes inférieures.

Ces bandes d'agrafes (génération II) présentaient cependant plusieurs inconvénients :
- la barrette continue reliant les agrafes supérieures rendait le dispositif rigide dans le sens de la largeur de la bande,
- le nombre de griffes par charnon n'était finalement que de deux, ce qui ne permettait pas un arrimage sûr des charnons en présence de fortes tractions ponctuelles ou même plus étendues.

La présente invention a pour objet de proposer un dispositif de jonction de bande transporteuse faisant appel à des séries d'agrafes d'un genre nouveau, dotées de qualités de souplesse tout en assurant un arrimage beaucoup plus sûr des charnons au bord aux extrémités de bandes transporteuses, grâce à une géométrie autorisant l'emploi d'un nombre de griffes par charnon nettement plus élevé, ce qui procure une fixation créant une solidarité entre les charnons, le dispositif étant ainsi apte à faire face à des tractions nettement plus importantes affectant la bande transporteuse, et donc la jonction, sans dommage pour les extrémités de bande transporteuse.

Cet objet est atteint grâce à un dispositif de jonction pour bandes transporteuses constitué d'une première série de charnons, ou oreilles, susceptibles d'être fixés sur une des extrémités d'une bande transporteuse, et d'une deuxième série de charnons ou oreilles, susceptibles d'être fixés sur l'autre extrémité de ladite bande transporteuse, les charnons des deux séries étant fixés aux extrémités respectives de la bande transporteuse de manière à être en saillie par rapport à ces extrémités, les deux séries de charnons pouvant être assemblées de façon articulée au moyen d'une tige de liaison et d'articulation enfilée successivement dans un charnon de la première série, puis dans un charnon de la deuxième série, et ainsi de suite, les charnons des deux séries fixés aux extrémités respectives de la bande transporteuse ayant été préalablement imbriqués en rapprochant les deux extrémités de la bande transporteuse, caractérisé en ce que, dans chacune des deux séries de charnons les charnons se raccordent à des plaquettes de fixation, la branche supérieure d'un premier charnon se raccordant à une plaquette supérieure et la branche supérieure d'un deuxième charnon, adjacent au premier charnon, se raccordant à ladite plaquette supérieure, la branche inférieure dudit deuxième charnon se raccordant à une plaquette inférieure, la branche inférieure d'un troisième charnon, adjacent au deuxième charnon, se raccordant à ladite plaquette inférieure, et ainsi de suite en formant une disposition en méandres susceptible de recevoir entre les plaquettes supérieures et inférieures, une extrémité de bande transporteuse, les plaquettes supérieures et respectivement inférieures étant munies de griffes, ou crocs, dont les pointes sont orientées globalement vers le bas en ce qui concerne les plaquettes supérieures et globalement vers le haut en ce qui concerne les plaquettes inférieures, ces griffes étant disposées sur un bord ou sur des bords des plaquettes, et/ou à l'intérieur de la surface des plaquettes.

Un autre objet de la présente invention est de faciliter la pose des séries d'agrafes selon l'invention, en intégrant un moyen de calage de la série d'agrafes tout au long de l'extrémité de la bande transporteuse.

Cet objet est atteint grâce à des butées dont la réalisation est facile grâce à la géométrie selon l'invention, les plaquettes comportant des butées constituées chacune d'un morceau de tôle découpé en même temps que les autres éléments, charnons, plaquette et griffes, ce morceau de tôle étant raccordé à la plaquette par une ligne de pliure et faisant saillie approximativement à angle droit par rapport au plan de la plaquette, dans l'espace situé entre les plaquettes supérieures et inférieures où doit être insérée l'extrémité de bande transporteuse, la ligne de pliure se situant au niveau de l'arrière des charnons à l'endroit où doit venir le bord avant de l'extrémité de la bande transporteuse.

D'autres particularités avantageuses proposées par la présente invention sont également décrites en liaison avec des formes de réalisation décrites plus loin, en relation avec le dessin dont :
la figure 1 représente en perspective une série d'agrafes de la génération II ;
la figure 2 représente en plan un flan de découpe des agrafes selon la publication de demande de brevet européen EP 0 752 542 A1 ;
la figure 3 représente en perspective une première forme de réalisation d'agrafes selon l'invention ;
la figure 4 représente en perspective une deuxième forme de réalisation d'agrafes selon l'invention ;
la figure 5 représente en perspective une troisième forme de réalisation d'agrafes selon l'invention ;
la figure 6 représente en perspective une quatrième forme de réalisation d'agrafes selon l'invention ;
la figure 7 représente en perspective une cinquième forme de réalisation d'agrafes selon l'invention ;
la figure 8 représente en perspective la cinquième forme de réalisation d'agrafes avec une extrémité de bande transporteuse engagée ;

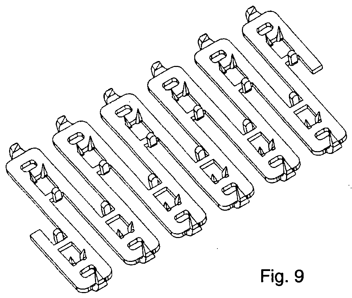

la figure 9 est une vue de la forme de réalisation des figures 7 et 8, en plan au stade de la découpe initiale avant les pliages.

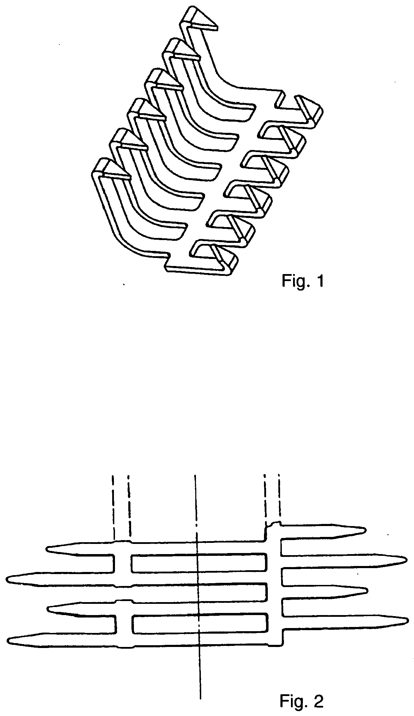

Comme on le voit sur la figure 1 qui représente en perspective une série d'agrafes de l'art antérieur (génération II), cette série est constituée d'une barrette continue portant des griffes, l'ensemble ressemblant à un peigne dont le manche (la barrette) porterait des griffes de fixation des deux côtés du manche. Du côté inférieur (sur le dessin) on remarque de longues branches se terminant par une griffe, lesquelles sont destinées après pliage en U à former des charnons entre la barrette continue et les griffes constituant l'extrémité de ces longues branches. De l'autre côté de la barrette continue (côté supérieur sur le dessin), des branches plus courtes dont l'extrémité forme une griffe sont disposées avec un certain décalage dans le sens longitudinal de la barrette. On comprend qu'après l'introduction d'une extrémité de bande transporteuse et le resserrage des griffes supérieures et des griffes inférieures contre les faces de l'extrémité de la bande transporteuse les griffes pénètrent dans l'épaisseur de la bande transporteuse en fixant la série d'agrafes tout en laissant des charnons en saillie par rapport à l'extrémité de la bande transporteuse. Le décalage entre les griffes inférieures et les griffes supérieures correspondantes a été prévu pour éviter que les griffes s'accrochent dans la bande transporteuse sur une même ligne longitudinale de la bande transporteuse en vue d'éviter que, lors du fonctionnement de la bande, les tractions s'exercent sur cette même ligne avec un risque accru de déchirure de l'extrémité de la bande transporteuse.

La figure 2 représente la découpe à plat d'une autre série d'agrafes de jonction de l'art antérieur du même genre que celui de la figure 1 (génération II). On remarque que pour éviter des déviations des longues griffes inférieures lors de la pose des agrafes, on a prévu une barrette reliant ces griffes deux par deux (publication de demande de brevet EP 0 752 542 A1).

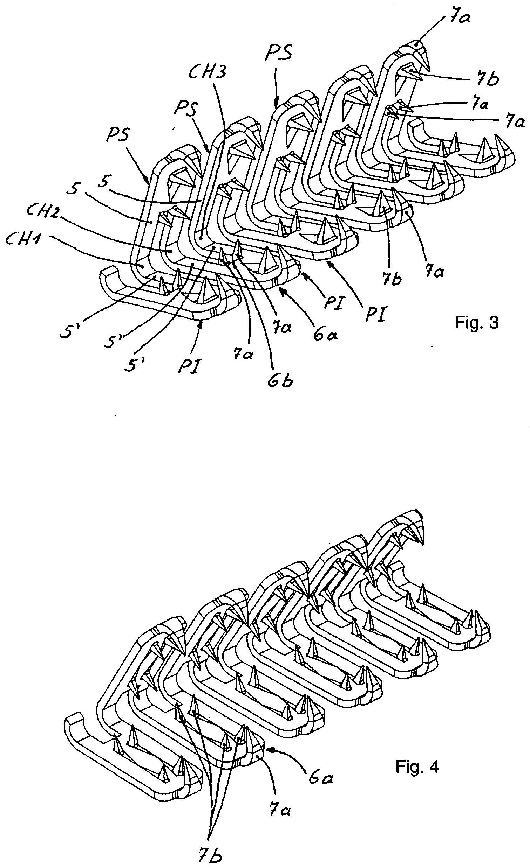

La figure 3 représente une forme de réalisation d'une série d'agrafes selon la présente invention vue en perspective.

On remarque les charnons CH 1, 2, 3, les branches supérieures 5, les branches inférieures 5', les plaquettes inférieures PI, les plaquettes supérieures PS. Comme décrit plus haut, les charnons se raccordent à des plaquettes de fixation, la branche supérieure 5 d'un premier charnon CH1 se raccordant à une plaquette supérieure PS et la branche supérieure 5 d'un deuxième charnon CH2, adjacent au premier charnon CH1, se raccordant à ladite plaquette supérieure PS, la branche inférieure 5' dudit deuxième charnon CH2 se raccordant à une plaquette inférieure PI, la branche inférieure 5' d'un troisième charnon CH3, adjacent au deuxième charnon, se raccordant à ladite plaquette inférieure PI, et ainsi de suite, en formant une disposition en méandres susceptible de recevoir entre les plaquettes supérieures PS et inférieures PI, une extrémité de bande transporteuse.

Les plaquettes supérieures comportent des griffes orientées globalement vers le bas, des griffes 7a étant disposées au niveau du bord arrière 6a des plaquettes et au niveau du bord avant 6b des plaquettes. Les plaquettes inférieures comportent également des griffes orientées globalement vers le haut, des griffes 7a étant disposées au niveau du bord arrière 6a des plaquettes et au niveau du bord avant 6b des plaquettes.

D'autres griffes 7b sont disposées à l'intérieur de la surface des plaquettes supérieures et de celle des plaquettes inférieures. Toutes les griffes sont obtenues par découpe en même temps que la découpe des charnons et des plaquettes, et pliées dans la direction convenable. On comprend que d'autres dispositions de griffes que celles de la figure 3 sont possibles, certaines sont indiquées sur les dessins qui suivent, représentant des formes de réalisation préférées.

La figure 4 montre des plaquettes selon l'invention comportant cinq griffes (1 griffe 7a au niveau du bord arrière 6a des plaquettes et 4 griffes 7b à l'intérieur de la surface des plaquettes).

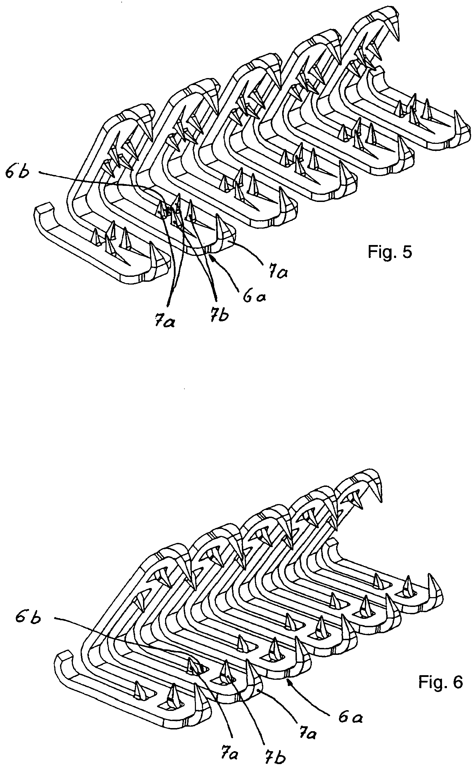

La figure 5 montre des plaquettes selon l'invention comportant également cinq griffes (1 griffe 7a au niveau du bord arrière 6a des plaquettes, 2 griffes 7a au niveau du bord avant 6b des plaquettes et 2 griffes 7b à l'intérieur de la surface de la plaquette).

La figure 6 montre des plaquettes selon l'invention comportant trois griffes (1 griffe 7a au niveau du bord arrière 6a des plaquettes, 1 griffe 7a au niveau du bord avant 6b des plaquettes et une griffe 7b à l'intérieur de la surface de la plaquette).

Il apparaît clairement que la géométrie selon l'invention permet de nombreuses implantations des griffes différentes de celles représentées, tout en restant dans la portée de l'invention. Ceci est un avantage considérable car on peut ainsi facilement réaliser des séries d'agrafes selon l'invention adaptées aux différents types de bandes transporteuses, à leur armature, à leur épaisseur, à leur matière constitutive.

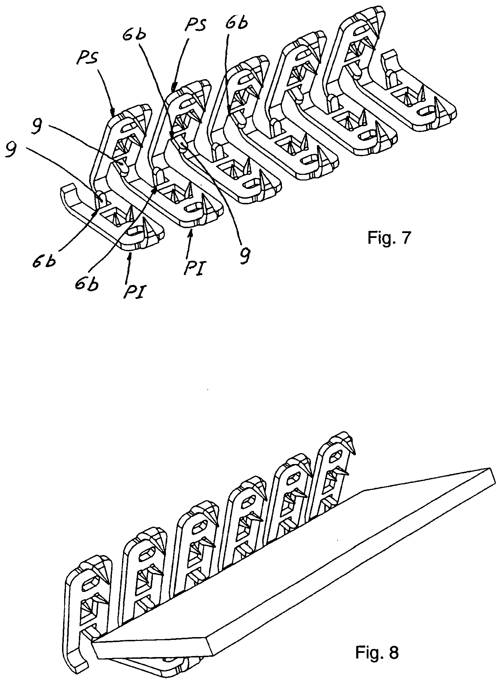

La figure 7 représente une autre forme de réalisation des séries d'agrafes selon la présente invention. Ces agrafes comportent des butées 9 disposées au niveau du bord avant 6b des plaquettes inférieures PI. Ces butées consistent en des découpes débordant initialement du bord avant 6b des plaquettes inférieures qui sont ensuite pliées vers le haut le long d'une ligne de pliure alignée avec le bord avant 6b des plaquettes inférieures PI et respectivement des plaquettes supérieures. Un agencement analogue existe dans les plaquettes supérieures On comprend que lors de la mise en place des séries souples d'agrafes selon l'invention, ces butées permettent un calage parfait, charnon par charnon, contre l'extrémité de la bande transporteuse. Il est possible de placer des butées uniquement sur les plaquettes supérieures, ou uniquement sur les plaquettes inférieures. Cependant une telle disposition rendrait les plaquettes supérieures différentes des plaquettes inférieures, ce qui ne faciliterait pas la mise en place, en obligeant les opérateurs à tenir compte de la présence ou de l'absence de butées sur certaines plaquettes alors qu'avec des butées sur toutes les plaquettes les agrafes peuvent être disposées sans risque d'erreur.

Les séries d'agrafes selon l'invention, ainsi placées et calées à cheval sur les extrémités de bandes transporteuses sont faciles à refermer et à fixer à l'aide d'un marteau, ou d'outillages pneumatiques, hydrauliques ou électriques connus dans l'art.

Bien que les griffes 7a et 7b puissent être disposées à volonté, il est avantageux de ne pas disposer deux griffes, ou plus, en alignement longitudinal dans les plaquettes, l'alignement longitudinal étant un alignement selon une ligne parallèle à la direction longitudinale des plaquettes définie, quelles que soient les dimensions des plaquettes comme étant celle des branches des charnons, qui est aussi la direction de défilement de la bande transporteuse sur laquelle doivent être montées les agrafes du dispositif de jonction selon l'invention.

Il peut également être avantageux que les griffes soient disposées dans chaque plaquette, dans la surface laissée libre par les projections géométriques des deux plaquettes situées à gauche et à droite sur le côté opposé des agrafes. Avec une telle disposition, lors de la pose des agrafes, les pointes des griffes peuvent être rabattues plus facilement, en profitant de l'enfoncement temporaire des plaquettes dans la matière élastique de la bande transporteuse, au moyen de l'outil utilisé.

Comme l'a montré la description qui précède, la présente invention présente plusieurs avantages décisifs du point de vue industriel en comparaison avec les agrafes à griffes de l'art antérieur
- elle permet de choisir d'utiliser un nombre de griffes par charnon nettement supérieur, ce qui améliore grandement l'arrimage des charnons,
- l'utilisation de plaquettes permet de disposer des griffes aussi bien sur les bords des plaquettes qu'à l'intérieur de leur surface,
- la fixation alternée par le dessus, puis par le dessous, et ainsi de suite, permise par la disposition en méandres procure une fixation parfaitement équilibrée des charnons,
- l'absence de barrette de liaison continue, procure une souplesse utile dans le sens de la largeur de la bande transporteuse. Ainsi des relevés accidentels, ou voulus, de la bande transporteuse sont possibles sans risque de casse, ce qui n'était pas le cas avec les charnons de l'art antérieur réunis par une barrette continue.

## Revendications

1. Dispositif de jonction pour bandes transporteuses constitué d'une première série de charnons (CH), ou oreilles, susceptibles d'être fixés sur une des extrémités d'une bande transporteuse, et d'une deuxième série de charnons (CH), ou oreilles, susceptibles d'être fixés sur l'autre extrémité de ladite bande transporteuse, les charnons des deux séries étant fixés aux extrémités respectives de la bande transporteuse de manière à être en saillie par rapport à ces extrémités, les deux séries de charnons pouvant être assemblées de façon articulée au moyen d'une tige de liaison et d'articulation enfilée successivement dans un charnon de la première série, puis dans un charnon de la deuxième série, et ainsi de suite, les charnons des deux séries fixés aux extrémités respectives de la bande transporteuse ayant été préalablement imbriqués en rapprochant les deux extrémités de la bande transporteuse
**caractérisé en ce que**,
dans chacune des deux séries de charnons (CH), les charnons se raccordent à des plaquettes de fixation, la branche supérieure (5) d'un premier charnon (CH1) se raccordant à une plaquette supérieure (PS) et la branche supérieure (5) d'un deuxième charnon (CH2), adjacent au premier charnon (CH1), se raccordant à ladite plaquette supérieure (PS), la branche inférieure (5') dudit deuxième charnon (CH2) se raccordant à une plaquette inférieure (PI), la branche inférieure (5') d'un troisième charnon (CH3), adjacent au deuxième charnon, se raccordant à ladite plaquette inférieure (PI), et ainsi de suite, en formant une disposition en méandres susceptible de recevoir entre les plaquettes supérieures (PS) et inférieures (PI), une extrémité de bande transporteuse, les plaquettes supérieures (PS) et respectivement inférieures (PI) étant munies de griffes (7a, 7b), ou crocs, dont les pointes sont orientées globalement vers le bas en ce qui concerne les plaquettes supérieures (PS) et globalement vers le haut en ce qui concerne les plaquettes inférieures (PI), ces griffes (7a, 7b) étant disposées sur un bord ou sur des bords des plaquettes (griffes 7a), et/ou à l'intérieur de la surface des plaquettes (griffes 7b).

2. Dispositif de jonction selon la revendication 1, **caractérisé en ce que** les charnons (CH), les plaquettes (PI, PS) et les griffes (7a, 7b) sont découpés dans une même bande de tôle et se présentent d'un seul tenant.

3. Dispositif de jonction selon la revendication 1 ou 2, **caractérisé en ce que** les griffes des plaquettes (PI, PS), qu'il s'agisse de griffes (7a) disposées sur des bords des plaquettes ou des griffes (7b) disposées à l'intérieur de la surface des plaquettes, sont disposées de telle manière qu'aucune griffe ne se trouve en alignement longitudinal avec une autre griffe.

4. Dispositif de jonction selon l'une des revendications 1 ou 2, **caractérisé en ce que** les griffes de chaque plaquette sont disposées dans la surface laissée libre par la projection géométrique des deux plaquettes situées à gauche et à droite sur le côté opposé des agrafes.

5. Dispositif de jonction selon l'une des revendications 1 à 4, **caractérisé en ce que** les plaquettes (PI, PS) comportent des butées 9 constituées chacune par un morceau de tôle découpé en même temps que les autres éléments, charnons, plaquettes et griffes, ce morceau de tôle étant raccordé à la plaquette par une ligne de pliure et faisant saillie approximativement à angle droit dans l'espace situé entre les plaquettes supérieures et inférieures où doit être insérée l'extrémité de bande transporteuse, la ligne de pliure se situant au niveau du bord avant (6b) des plaquettes.

6. Dispositif de jonction selon la revendication 5, **caractérisé en ce que** les butées (9) ne sont réalisées que sur les plaquettes supérieures (PS), ou bien que sur les plaquettes inférieures (PI).

## Patentansprüche

1. Verbindungsvorrichtung für Förderbänder, die aus einer ersten Reihe von Scharnierteilen (CH) oder Ösen besteht, die auf einem der Enden eines Förderbands befestigt werden können, und aus einer zweiten Reihe von Scharnierteilen (CH) oder Ösen, die an dem anderen Ende des Förderbands befestigt werden können, wobei die Scharnierteile der zwei Reihen an den jeweiligen Enden des Förderbands derart befestigt sind, dass sie in Bezug zu diesen Enden vorstehen, wobei die zwei Reihen von Scharnierteilen gelenkig mittels eines Verbindungs- und Anlenkstifts, der nacheinander in ein Scharnierteil der ersten Reihe, dann in ein Scharnierteil der zweiten Reihe eingefügt wird, usw., zusammengefügt werden können, wobei die Scharnierteile der zwei Reihen, die an den jeweiligen Enden des Förderbands befestigt sind, zuvor verschachtelt wurden, indem die zwei Enden des Förderbands einander genähert werden,
**dadurch gekennzeichnet, dass**
in jeder der zwei Reihen von Scharnierteilen (CH) die Scharnierteile an Befestigungsplatten angeschlossen werden, wobei der obere Schenkel (5) eines ersten Scharnierteils (CH1) an eine obere Platte (PS) angeschlossen wird, und der obere Schenkel (5) eines zweiten Scharnierteils (CH2), der neben dem ersten Scharnierteil (CH1) liegt, an die obere Platte (PS) angeschlossen wird, wobei der untere Schenkel (5') des zweiten Scharnierteils (CH2) an eine untere Platte (PI) angeschlossen wird, wobei der untere Schenkel (5') eines dritten Scharnierteils (CH3), das neben dem zweiten Scharnierteil liegt, an der unteren Platte (PI) angeschlossen wird, usw., indem eine Anordnung von Mäandern gebildet wird, die zwischen den oberen Platten (PS) und den unteren Platten (PI) ein Ende des Förderbands aufnehmen kann, wobei die oberen Platten (PS) und jeweils unteren Platten (PI) mit Klauen (7a, 7b) oder Haken versehen sind, deren Spitzen insgesamt nach unten gerichtet sind, was die oberen Platten (PS) betrifft, und insgesamt nach oben, was die unteren Platten (PI) betrifft, wobei diese Klauen (7a, 7b) auf einem Rand oder auf Rändern der Platten (Klauen 7a) und/oder im Inneren der Oberfläche der Platten (Klauen 7b) angeordnet sind.

2. Verbindungsvorrichtung nach Anspruch 1, **dadurch gekennzeichnet, dass** die Scharnierteile (CH), die Platten (PI, PS) und die Klauen (7a, 7b) aus ein und demselben Blechband ausgeschnitten sind und ein durchgehendes Stück bilden.

3. Verbindungsvorrichtung nach Anspruch 1 oder 2, **dadurch gekennzeichnet, dass** die Klauen der Platten (PI, PS), was die Klauen (7a) betrifft, auf Rändern der Platten angeordnet sind, oder, was die Klauen (7b) betrifft, im Inneren der Oberfläche der Platten angeordnet sind, derart angeordnet sind, dass sich keine Klaue in Längsausrichtung mit einer anderen Klaue befindet.

4. Verbindungsvorrichtung nach einem der Ansprüche 1 oder 2, **dadurch gekennzeichnet, dass** die Klauen jeder Platte in der Oberfläche angeordnet sind, die von der geometrischen Projektion der zwei Platten, die links und rechts auf der Seite, die Klammern entgegengesetzt ist, liegen, freigelassen ist.

5. Verbindungsvorrichtung nach einem der Ansprüche 1 bis 4, **dadurch gekennzeichnet, dass** die Platten (PI, PS) Anschläge 9 umfassen, die jeweils aus einem Blechstück bestehen, das gleichzeitig mit den anderen Elementen, Scharnierteilen, Platten und Klauen ausgeschnitten wird, wobei dieses Blechstück an die Platte durch eine Faltlinie angeschlossen ist und in etwa im rechten Winkel in den Raum vorsteht, der zwischen der oberen und unteren Platte liegt, wo das Ende des Förderbands eingefügt werden soll, wobei sich die Faltlinie im Bereich des vorderen Rands (6b) der Platten befindet.

6. Verbindungsvorrichtung nach Anspruch 5, **dadurch gekennzeichnet, dass** die Anschläge (9) nur auf den oberen Platten (PS) oder nur auf den unteren Platten (PI) hergestellt sind.

## Claims

1. Junction device for conveyor belts comprised of a first series of chain link (CH), or ears, able to be fastened on one of the ends of a conveyor belt, and of a second series of chain links (CH), or ears, able to be fastened on the other end of said conveyor belt, with the chain links of the two series being fastened to the respective ends of the conveyor belt in such a way as to protrude in relation to these ends, with the two series of chain links able to be assembled in an articulated manner by means of a connecting rod and articulation fitted successively into a chain link of the first series, then into a chain link of the second series, and so on, with the chain links of the two series fastened to the respective ends of the conveyor belt have been pre-interleaved by bringing together the two ends of the conveyor belt
**characterised in that**,
in each one of the two series of chain links (CH), the chain links connect to fastening plates, with the upper branch (5) of a first chain link (CH1) connecting to an upper plate (PS) and the upper branch (5) of a second chain link (CH2), adjacent to the first chain link (CH1), being connected to said upper plate (PS), with the lower branch (5') of said second chain link (CH2) being connected to a lower plate (PI), with the lower branch (5') of a third chain link (CH3), adjacent to the second chain link, being connected to said lower plate (PI), and so on, by forming a meandering arrangement able to receive between the upper (PS) and lower (PI) plates, and end of the conveyor belt, with the upper (PS) and respectively lower (PI) plates being provided with claws (7a, 7b), or hooks, of which the tips are globally oriented downwards with regards to the upper plates (PS) and globally upwards with regards to the lower plates (PI), with these claws (7a, 7b) being arranged on an edge or on the edges of the plates (claws 7a), and/or inside the surface of the plates (claws 7b).

2. Junction device according to claim 1, **characterised in that** the chain links (CH), the plates (PI, PS) and the claws (7a, 7b) are cut in the same strip of sheet metal and are of the same piece.

3. Junction device according to claim 1 or 2, **characterised in that** the claws of the plates (PI, PS), whether entailing the claws (7a) arranged on the edges of the plates or the claws (7b) arranged inside the surface of the plates, are arranged in such a way that no claw is in longitudinal alignment with another claw.

4. Junction device according to one of claims 1 or 2, **characterised in that** the claws of each plate are arranged in the surface left free by the geometrical projection of the two plates located to the left and to the right on the side opposite the clasps.

5. Junction device according to one of claims 1 to 4, **characterised in that** the plates (PI, PS) comprise stops 9 each comprised of piece of sheet metal cut at the same time as the other elements, chain links, plates and claws, with this piece of sheet metal being connected to the plate by a crease line and projecting approximately at a right angle in the space located between the upper and lower plates where the end of the conveyor belt is to be inserted, with the crease line located on the front edge (6b) of the plates.

6. Junction device according to claim 5, **characterised in that** the stops (9) are carried out only on the upper plates (PS), or only on the lower plates (PI).
